(19) Europäisches Patentamt
European Patent Office
Office européen des brevets

(11) EP 1 976 318 B1

(12) EUROPEAN PATENT SPECIFICATION

(45) Date of publication and mention
of the grant of the patent:
15.05.2019 Bulletin 2019/20

(51) Int Cl.:
H04W 28/10 (2009.01)    H04W 48/18 (2009.01)
H04W 80/04 (2009.01)

(21) Application number: 07006381.3

(22) Date of filing: 28.03.2007

(54) **METHOD, SYSTEM AND DEVICE FOR OPTIMAL FLOW ASSIGNMENT FOR HETEROGENEOUS NETWORK ACCESS**

VERFAHREN, SYSTEM UND VORRICHTUNG ZUR OPTIMALEN FLUSSZUTEILUNG FÜR HETEROGENEN NETZZUGANG

PROCÉDÉ, SYSTÈME ET DISPOSITIF POUR L'ATTRIBUTION D'UN FLUX OPTIMAL POUR ACCÈS À UN RÉSEAU HÉTÉROGÈNE

(84) Designated Contracting States:
AT BE BG CH CY CZ DE DK EE ES FI FR GB GR HU IE IS IT LI LT LU LV MC MT NL PL PT RO SE SI SK TR

(43) Date of publication of application:
01.10.2008 Bulletin 2008/40

(73) Proprietor: Deutsche Telekom AG
53113 Bonn (DE)

(72) Inventors:
• Alpcan, Dr. Tansu
10625 Berlin (DE)
• Singh, Dr. Jatinder Pal
10719 Berlin (DE)

(74) Representative: Kampfenkel, Klaus et al
Blumbach - Zinngrebe
Patent- und Rechtsanwälte PartG mbB
Alexandrastrasse 5
65187 Wiesbaden (DE)

(56) References cited:
WO-A-03/047177        WO-A-2005/055524
WO-A-2005/062652      US-A1- 2004 185 785

• JUHA LEINO ET AL: "Flow Level Performance Analysis of Wireless Data Networks: A Case Study", COMMUNICATIONS, 2006. ICC '06. IEEE INTERNATIONAL CONFERENCE ON, IEEE, PI, 1 June 2006 (2006-06-01), pages 961-966, XP031025182, ISBN: 978-1-4244-0354-7

• XINWEI HONG ET AL: "A dynamic programming approach for optimal scheduling policy in wireless networks", COMPUTER COMMUNICATIONS AND NETWORKS, 2002. PROCEEDINGS. ELEVENTH INTE RNATIONAL CONFERENCE ON 14-16 OCT. 2002, PISCATAWAY, NJ, USA,IEEE, 14 October 2002 (2002-10-14), pages 530-536, XP010610932, ISBN: 978-0-7803-7553-6

• TIANMIN REN ET AL: "QoS provisioning for real-time traffic in wireless packet networks", GLOBECOM'02. 2002 - IEEE GLOBAL TELECOMMUNICATIONS CONFERENCE. CONFERENCE PROCEEDINGS. TAIPEI, TAIWAN, NOV. 17 - 21, 2002; [IEEE GLOBAL TELECOMMUNICATIONS CONFERENCE], NEW YORK, NY : IEEE, US, vol. 2, 17 November 2002 (2002-11-17), pages 1673-1677, XP010636428, ISBN: 978-0-7803-7632-8

• HUI CHEN ET AL: "Two Cross-Layer Optimization Methods for Transporting Multimedia Traffic Over Multicode CDMA Networks", IEEE WIRELESS COMMUNICATIONS AND NETWORKING CONFERENCE, 2007, WCNC 2007, 11 - 15 MARCH 2007, HONG KONG, IEEE OPERATIONS CENTER, PISCATAWAY, NJ, 1 March 2007 (2007-03-01), pages 288-293, XP031088544, ISBN: 978-1-4244-0658-6

EP 1 976 318 B1

- **JATINDER PAL SINGH ET AL: "An Optimal Flow Assignment Framework for Heterogeneous Network Access", WORLD OF WIRELESS, MOBILE AND MULTIMEDIA NETWORKS, 2007. WOWMOM 2007. IEEE INTERNATIONAL SYMPOSIUM ON A, IEEE, PI, 1 June 2007 (2007-06-01), pages 1-12, XP031149154, ISBN: 978-1-4244-0992-1**

## Description

### Technical Field of the Invention

The invention relates to method and communication system for dynamically assigning traffic flows to a plurality of access networks, wherein the traffic flows are provided by a source having multiple access networking capabilities. Furthermore, the invention concerns a device for use with in such a communication network.

### Background of the invention

Several networking technologies have evolved and become popular over the past few decades. Ethernet, DSL, cellular wireless networks, and IEEE 802.11 based wireless local area networks have become widely deployed and increasingly accessible. Existing networks tend to be heterogeneous in their attributes such as the supporting infrastructure, protocols, signaling mechanisms, offered data rates, etc. With the realization that several technologies will continue to coexist and there will be no clear winner, the drive towards convergence of networks is gaining momentum. Integration of heterogeneous access networks is part of the 4G network design as explained in P. Vidales, J. Baliosion, J. Serrat, G. Mapp, F. Stejano, and A. Hopper, "Autonomic sytem for mobility support in 4G networks," in IEEE Journal on Selcted Areas in Communications'05, vol. 23, no. 12, Dec. 2005. The IEEE 802,21 standard which is available online: http://www.ieee802.org/21/ is delineating a framework to enable handovers and interoperability between heterogeneous wireless and wireline networks. The IP Multimedia Subsystems (IMS), as explained in A. Cuevas, J. I. Moreno, P. Vidales, and H. Einsiedler, "The IMS platform: A solution for next generation network operators to be more than bit pipes," in IEEE Communications Magazine, issue on Advances of Service Platform Technologies, Aug. 2006, has defined an overlay architecture for providing multimedia services on top of heterogeneous networks.

From WO 2005/055524 A1 a traffic control method for handling traffic in multi-access communication systems is known, wherein an adaptive traffic control algorithm for reaching predetermined control objectives is continuously executed. The multi-access terminals spread their traffic over the available access networks based on a feedback control signal which is an output of the control algorithm. The control algorithm is based on measurements and estimates of network performance conditions in the access networks and/or user devices. A multi-access terminal can for example be a laptop computer with more than one application having several access network interfaces, each providing access to IP-based network services over a respective access network.

WO 2005/062652 A1 describes a system and a method allowing a user terminal in a network to simultaneously access a plurality of radio based access networks of diverse access technologies. An access selector is provided which comprises an access selection algorithm interacting with applications resident in the user terminal and with each access adapter for selection of a radio access network.

### Summary of the invention

It is an object of the present invention to provide a method and a communication system which efficiently route traffic flows over multiple access networks to destinations connected to a core network.

A core aspect of the present invention is to provide a device with a plurality of networking capabilities for accessing multiple networks with heterogeneous characteristics. In particular, a method is implemented for dynamically assigning traffic flows to different networks which leads to an efficient utilization of multiple access networks, e.g. wireless and/or wireline networks.) Therefore, a device middleware functionality is provided that monitors network characteristics, e. g. the available bit rate and the delay, of each access network and employs a Markov Decision Process (MDP) based control scheme that in conjunction with stochastic characterization of the available bit rate and delay of the access networks generates an optimal policy for allocation of flows to different networks. It should be noted that the delay corresponds to half of the measured round trip time (RTT) from the device to the host to which a given flow is destined. The optimal policy is periodically updated and is consulted by the traffic flows to dynamically perform network selection during their lifetimes.

In particular, measurement tests are performed to collect values or traces of available bit rate and delay characteristics for example on Ethernet and WLAN networks on a work day in a corporate work environment.

To prove the results the flow assignment framework is implemented in the network simulator (ns-2). Information thereon is available online: http://www.isi.edu/ns/). Furthemore, the system performance for a set of elastic video-like flows using the collected traces is simulated.

The method using the MDP based flow assignment policy leads to significant enhancement in the QoS provisioning, i.e. lower packet delays and packet loss rates for the flows, as compared to policies which do not perform dynamic flow assignment but statically allocate flows to different networks using heuristics like average available bit rate on the networks.

The technical problem is solved by a method for dynamically assigning traffic flows to a plurality of access networks, wherein the traffic flows are provided by a source having multiple access networking capabilities. A source having multiple access networking capabilities is in particular a device which is adapted to transmit traffic flows via a plurality of access networks the device is connected to. The method comprises the following steps:

a) measuring at given time intervals predetermined network characteristics of a plurality of access networks,
b) estimating the network characteristic variation behavior of each access network of the plurality of access networks using the measured network characteristics,
c) detecting a traffic flow of at least one application running at a source to be transmitted from a source to a destination,
d) in response to the detected traffic flow selecting an access network from the plurality of access networks by using the network characteristic variation behavior of the plurality of access networks,
e) repeating steps c) and d) every time the application provides a traffic flow to be transmitted, wherein step d) uses a Markov decision process to select an access network for the identified traffic flow, and wherein each traffic flow is reassigned at predetermined times to a selected one of the plurality of access networks.

Due to the variation in network characteristics, in particular the available bit rate (ABR) and the delay, especially when the access networks include wireless links, the network characteristics variations require robust modeling techniques and stochastic tools. Therefore, step d) uses a Markov decision process to select an access network for the detected traffic flow. It is to be noted that the delay of each access network can be evaluated from the round trip time (RTT) and corresponds especially to the half of the measured round trip time.

To define the network characteristic variation behavior of the plurality of access a stochastic model is used which is based on a finite state space which represents the delay and available bit rate values of all access networks.

In order to optimize the flow assignment for the detected traffic flow the reward of each access network for the identified traffic flow is determined and in step d) the optimal access network is selected as a function of the determined reward values.

In a preferred embodiment the step of determining the reward comprises the step of classifying the detected traffic flow. The traffic flow can be a video traffic flow, an audio traffic flow and the like.

The technical problem is also solved by a communication system for dynamically assigning traffic flows to a plurality of access networks, which comprises:

a plurality of access networks connected to a core network, and at least a source device. The device comprises multiple access networking interfaces each associated with a separate access network of the plurality of access networks, means for measuring at given time intervals predetermined network characteristics of each access network, storing means for storing the measured network characteristics, means for estimating the network characteristic variation behavior of each access network of the plurality of access networks using the measured network characteristics, means for detecting a traffic flow of at least one application running at the source device to be transmitted to a destination, means for selecting in response to the detected traffic flow an access network from the plurality of access networks by using the network characteristic variation behavior of the plurality of access networks.

To control the traffic flow to destinations the device includes means for allowing an application running at the source device to transmit a traffic flow and to invoke the detecting means.

The selecting means uses a Markov decision process to select an access network for the identified traffic flow. The selecting means is adapted to reassign each traffic flow at predetermined times to a selected one of the plurality of access networks.

In particular, the estimation means uses a stochastic model to define the network characteristic variation behavior of the plurality of access networks.

In order to optimize the flow assignment for the detected traffic flow the device includes means for determining the reward of each access network for the identified traffic flow, wherein the optimal access network is selected as a function of the determined reward values.

In addition the technical problem is further solved by a device for use within such a communication system.

## Brief Description of the Drawings

Fig. 1       shows a device according to the invention;
Fig. 2       shows an exemplary system for performing flow assignment in the device of Fig. 1;
Fig. 3       shows an exemplary system with the exemplary components of the middleware in the device of Fig. 1;

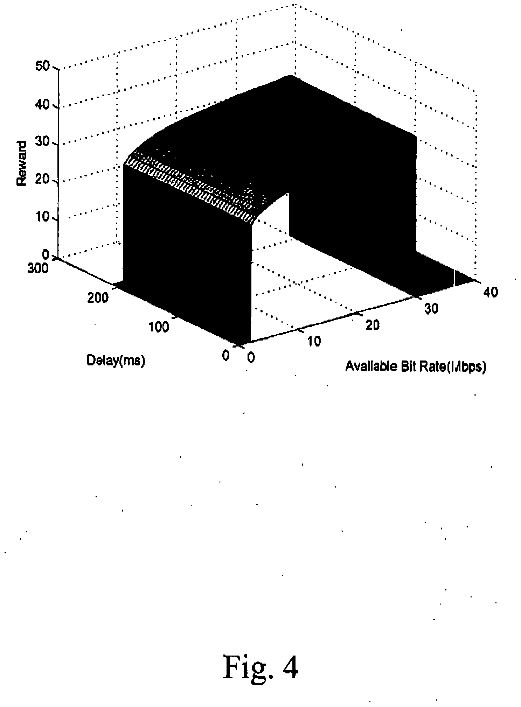

Fig. 4       shows a Reward with units of PSNR (dB)) offered by a network to an incoming flow for $\theta = 97.8$, $r_0 = 0.075$ (in Mbps), $D_0 = 0.49$, $T = 150ms$, and $R_{min} = 2Mbps$;

Fig. 5    shows the measured available bit rate on an Ethernet access link regarding a flow transmission from a host located in Deutsche Telekom laboratories, Berlin to a host located in Stanford University in California;

Fig. 6    shows measured available bit rate on an 802.11g access link regarding a flow transmission from a host located in Deutsche Telekom laboratories, Berlin to a host located in Stanford University in California;

Fig. 7    shows the measured available bit rate on an 802.11b access link regarding a flow transmission from a host located in Deutsche Telekom laboratories, Berlin to a host located in Stanford University in California;

Fig. 8    shows a network topology employed for simulation with the network simulator ns-2;

Fig. 9    shows the average flow rate for traffic flows from a host located in Deutsche Telekom laboratories, Berlin to a host located in Stanford University in California;

Fig. 10   shows the available bit rate for a greedy-AIMD flow assignment regarding a flow transmission from a host located in Deutsche Telekom laboratories, Berlin to a host located in Stanford University in California;

Fig. 11   shows the available bit rate for a RP-AIMD flow assignment regarding a flow transmission from a host located in Deutsche Telekom laboratories, Berlin to a host located in Stanford University in California;

Fig. 12   shows the available bit rate for the MDP based flow assignment according to the invention regarding a flow transmission from a host located in Deutsche Telekom laboratories, Berlin to a host located in Stanford University in California;

Fig. 13   shows the average percentage packet loss regarding a traffic flow from a host located in Deutsche Telekom laboratories, Berlin to a host located in Stanford University in California;

Fig. 14   shows a CDF (cumulative distribution function) of delay for an Ethernet access link regarding a flow transmission from a host located in Deutsche Telekom laboratories, Berlin to a host located in Stanford University in California;

Fig. 15   shows a CDF of delay for an 802.11g access link regarding a flow transmission from a host: located in Deutsche Telekom laboratories, Berlin to a host located in Stanford University in California;

Fig. 16   shows a CDF of delay for an 802.11b access link regarding a flow transmission from a host located in Deutsche Telekom laboratories, Berlin to a host located in Stanford University in California;

Fig. 17   shows the average percentage packet loss regarding a traffic flow from a host located in Deutsche Telekom laboratories, Berlin to a host located in Stanford University in California;

Fig. 18   shows the average percentage packet loss regarding a traffic flow from a host located in Deutsche Telekom laboratories, Berlin to a host located in the Technical University of Berlin.

## Detailed Description of the Invention

It is today commonplace to have electronic devices with multiple networking capabilities. Personal computers and laptops typically come equipped with a built-in WLAN card, a PCMCIA slot, and an Ethernet port. PDAs with WLAN and GPRS connectivity are becoming popular.

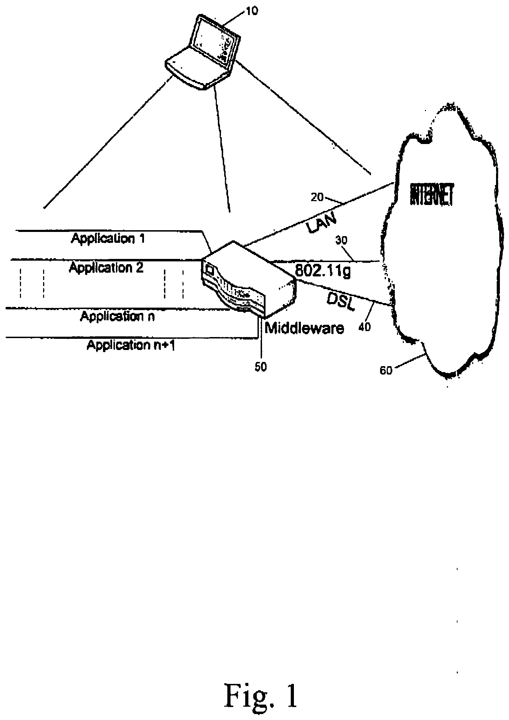

Fig. 1 depicts an exemplary operational scenario for routing of traffic flows originating from applications 1 to n+1 running on a device 10 via access networks 20, 30, 40 that the device 10 has access to. The device 10 can be a laptop. In particular, the device 10 can be, for example, connected to a core network 60, e. g. the Internet via a local area network (LAN) 20, e. g. an Ethernet based access network, an 802.11g based access network 30, an 802.11b based access network or a digital subscriber line 40. In the embodiment shown in Figs. 1, 2 and 3, three access network interfaces are implemented in the laptop 10.

As a multitude of bandwidth demanding applications such as IPTV and Internet Video run on devices, a single network may often not be sufficient to meet the requirements of the applications. Several interesting scenarios may be envisioned. Imagine a user in a corporate setting participating in a video conference call via her device 10 having a DSL, an Ethernet and IEEE 802.11g connectivity as shown in Fig. 1. While engaged in the conference proceedings, the user is uploading content on a remote server for the participants to access, and at the same time needs to retrieve some files from the server. Several traffic flows are hence created by the laptop 10 which dynamically monitors the networks at its disposal. The laptop 10 then dynamically assigns and reassigns each traffic flow at predetermined times to a selected one of these access networks 20, 30 or 40 based on the varying network characteristics like available bite rate (ABR) and delay and routes the flows via these networks 20, 30 or 40 and the Internet 60 to a destination which is not depicted.

While the distribution of traffic flows amongst the access networks 20, 30 and 40 can enable better network utilization than a single network use at a time, the variation in network characteristics like available bit rate ABR and delay makes the problem of flow assignment challenging. Especially when the access networks include wireless links, the network characteristics variations require robust modeling techniques and stochastic tools. Therefore, laptop 10 is equipped with a middleware functionality schematically depicted in Fig 1 by functional block 50 which monitors the available bit rate and delays on the different networks 20, 30 and 40. A Markov Decision Process (MDP) as explained in D. Bertsekas, Dynamic Programming and Optimal Control, 2nd ed. Belmont, MA: Athena Scientific, 2001, vol. 2 is used as a control scheme to decide an optimal policy for allocation of flows with given utilities to the networks.

In a preferred embodiment, functional block 50 is adapted to estimate the available bit rate and delay values via the access networks 20, 30 and 40 to destination hosts in the Internet 60. The applications 1 to n+1 running on the device 10 consult functional block 50 for routing each traffic flows via a selected access network, which is dynamically assigned to each application. The list of preferred destinations hosts can be maintained at the device 10 based on user usage history, user preferences, etc., as for instance described in F. Guo, J. Chen, W. Li, and T. Chiueh, "Experiences in building a multihoming load balancing system," in Proc. IEEE INFOCOM, 2004.

**Analytical framework**

We denote the set of access networks available to the device 10 by $I = \{1,2,...,N\}$. In the preferred embodiment as shown in Fig. 1 N is set to 3. The system state, designated as $s \in S$, represents the delay and available bit rate (ABR) characteristics of all the access networks 20, 30 and 40.

The objective then is to decide an optimal policy $\mu^*(s)$ that, as function of system state, suggests action $u \in I$ that signifies an access network to be selected for the assignment of a specific flow. The optimal policy is periodically evaluated for the assignment of each flow in the device 10 to a suitable network.

Each access network $i \in I$ is characterized by delay and ABR values $d_i \in [d_{min},d_{max}]$ and $r_i \in [r_{min},r_{max}]$ measured at a given time. The range of delay and ABR values of each network is mapped to a set of quantized states. Let

$$S_d^i = \{s_{d1}^i,...,s_{dM}^i\} \text{ and } S_r^i = \{s_{r1}^i,...,s_{rM}^i\}$$

represent states based on the quantized delay and ABR of the network $i$. Then each network is associated with a single superset of states $S^i := S_d^i \times S_r^i$ and the whole system with $S := \Pi_{i \in I} S^i$ obtained through cross-product operations on the sets.

The delay and ABR of each access network exhibits variations due to a multitude of underlying factors ranging from fading and shadowing in wireless channels to congestion in wired ones. While the wired access networks may be characterized using simpler techniques, the fast variations in wireless access network characteristics require robust stochastic models. It is shown in the literature that Markov models can well characterize network characteristic variation behavior. In addition, there exists well-established computational and theoretical methods to optimize Markovian processes as explained in D. Bertsekas, Dynamic Programming and Optimal Control, 2nd ed. Belmont, MA: Athena Scientific, 2001, vol. 2. Hence, a finite-state Markov chain is defined on the state space $S$ to model the access network behaviors. We denote by $p_{i,j}$ the transition probability

$$p_{i,j} := P(s(n+1) = j \mid s(n) = i),$$

where $i, j \in S$ and $s(n)$ represents the current state of all available access networks 20, 30 and 40 at time step .

Consequently, the state transition matrix is defined by $M := [(p_{i,j})]$ and the system equation is

$$\tilde{p}(n+1) = \tilde{p}(n)M,$$

where $\tilde{p}$ denotes the probability vector over the state space $S$ corresponding to all possible states of the access networks 20, 30 and 40.

There exist a variety of methods for computing the transition probabilities between network states. We make the implicit assumption of ergodicity and staticnarity over a certain time interval over which $M$ is time-invariant. Given sufficiently many state transition pairs obtained from the evolution of network characteristics over time it is possible to compute $M$ using standard methods, as for instance explained in G. Froyland, Nonlinear Dynamics and Statistics: Proceedings, NewtonInstitute, Cambridge, 1998. Birkhauser, 2001, ch. Extracting dynamical behavior via Markov models, pp. 283-324. Let us use the first state of each pair $C^{in} = \tilde{p}(n)$ where $n$ is even, as initial conditions for the underlying dynamical system and denote $C^{out} = \tilde{p}(n')$ where $n$ is odd as the image of these points after one iterate of the dynamical system. After identifying the sets of input and output samples $C^{in}$ and $C^{out}$ the transition probability from state $i$ to $j$ is estimated as

$$\hat{p}_{ij} = \frac{\sum_{[k:C_k^{out} \in j]}}{\sum_{[l:C_l^{in} \in i]}}$$

where $\sum_{\left[k:C_k^{out} \in j\right]}$ denotes the number of points $k$ such that $C_k^{out} \in j$.

As the number of state-transition pairs increases, i.e., as $n \to \infty$ the invariant measure of the Markovian operator $M$ approximates the time-averaged distribution of the states better.

The control action $u$ corresponding to the choice of a single network modifies the dynamical system and leads to control Markov chains $M(u)$. The transition probability $p_{ij}(u_k)$ of the controlled Markov chain denotes the probability of the next state being in $j$ conditioned on the current state being in $i$ and control being $u_k \cdot M(u)$ for a given $u$ has a dimension $SXS$.

Using a Markov model on a finite state space $S$ with finitely many control actions $u$, a Markov Decision process is defined to dynamically assigning traffic flows to the access networks 20, 30 and 40.

Towards this end a real-valued reward function $R(s,u)$ is defined over the set of states $S$ and as a function of the control action $u$. The reward function quantifies the preference for a system state and the choice of a network by a flow and can then be expressed as :

$$R(s, u) = \beta \hat{R}^u(r^u, d^u) + (1 - \beta) \sum_{i \in I \setminus \{u\}} \hat{R}^i(r^i, d^i), \quad (1)$$

where $\hat{R}^j(r^j, d^j)$ is the reward offered by network $j$ to a flow in terms of the ABR $r^j$ and delay $d^j$ of the network. $\beta \in [0,1]$ represents the tradeoff between selfishness and global good due to an action. The first term in equation (1) is the reward gained by a flow as a consequence of the action $u$ directing it to a specific network in $I$. The second term represents the aggregate reward functions in state $s$ for the other networks. For the value of $\beta$ as 1, the MDP when executed for the assignment of a flow will only account for the reward received by the flow on the assigned network while evaluating the optimal allocation policy. On the other hand when $\beta$ is 0, the Markov Decision Process MDP while evaluating the optimal policy will only ta<e into consideration the rewards of the networks other than the one to which a flow is assigned.

In a preferred embodiment $\hat{R}^j(r^j, d^j)$ in equation (1) is formulated to represent the reward offered by an access network to traffic flows which exhibit the characteristics of video traffic:

$$\hat{R}^j(r^j, d^j) = f(r^j)\, u_s(r^j - r_{min})\, u_s(d^j - T), \quad (2)$$

where $f(r^j)$ is a concave utility function, and $u_s(r^j)$ and $u_s(r^j)$ are unit step functions. The flows represented in equation (2) are characterized by a minimum usable bit rate $r_{min}$. For rates greater than $r_{min}$, the utility function for the flows is concave with respect to the allocated bit rate. Furthermore, the packets belonging to the flows are associated with a maximum latency (or the playout deadline) $T$ that they can tolerate. For $f(r^j)$ in equation (2), we employ video encoder rate distortion models from K. StuhlMuller, N. Farber, M. Link, and B. Girod, "Analysis of video transmission over lossy channels," in IEEE Journal on Selected Areas in Communication, vol. 18, no. 6, June 2000, and adopt the following form:

$$f(r^j) = 10 log_{10}(255^2 / D(r^j)), \quad (3)$$

which represents the Peak Signal to Noise Ratio (PSNR) of an encoded video stream with encoder distortion $D(r^j)$ given by

$$D(r^j) = \frac{\theta}{r^j - r_0} + D_0. \tag{4}$$

The parameters $\theta, D_0, r_0$ as discussed in K. StuhlMuller, N. Farber, M. Link, and B. Girod, "Analysis of video transmission over lossy channels," in IEEE Journal on Selected Areas in Communication, vol. 18, no. 6, June 2000 can be estimated from empirical rate-distortion curves via regression techniques.

Now the reward per stage in the MDP framework, $g : SXI \rightarrow \Re$ under a stationary policy $\mu(s): S \rightarrow I$ and at stage $n$ is given by $g(s(n), \mu(s))$, with $\Re$ representing the set of real numbers. Notice that for a system state $s$ and a given stationary policy $\mu(s)$, $g(s, \mu(s))$ is equal to the reward $R(s, u)$ with $u = \mu(s)$.

Although the stationarity window for the policies may be limited an infinite horizon formulation of the problem as a simplification is assumed. Then the total reward $J$ is given as :

$$J_\mu(s) := \lim_{N \to \infty} \sum_{n=0}^{N} \alpha^n g(s(n), \mu(s)), \tag{5}$$

where the positive scalar $0 < \alpha < 1$ denotes the discount factor over future stages (decisions). The maximum total reward is defined by

$$J^*(s) := \max_{\mu \in \Pi} J_\mu(s), \quad s \in S. \tag{6}$$

where $\Pi$ is the set of all possible policies. The policy $\mu(s)$ for assigning an access network to a specific flow is optimal if $J_\mu^*(s) = J_\mu(s)$ for all states $s$. It is a well known fact that under certain assumptions as pointed cut in Chapter 1 of D. Bertsekas, Dynamic Programming and Optimal Control, 2nd ed. Belmont, MA: Athena Scientific, 2001, vol. 2., there exists an optimal deterministic stationary policy $\mu^*(s)$ that solves the *Bellman's equation*, i.e.,

$$J_{\mu^*}(s) = g(s(n), \mu^*(s)) + \alpha J_{\mu^*}(s M(\mu^*(s))), \quad \forall s \in S. \tag{7}$$

Furthermore, $J^* = J_\mu^*(s)$ is the unique solution of Bellman's equation.

There are multiple alternative algorithms to solve the infinite horizon discounted reward problem described above. However, without loss of generality the well-known *value* iteration algorithm is used. The right hand side of the Bellman's equation in (7) actually corresponds to a single iteration or recursion of the venerable dynamic programming algorithm (DPA)

$$J_{n+1}(s) = \max_u g(s(n), u) + \alpha J_n(s(n) M(u)), \tag{8}$$

at the time step $n$ and state $s \in S$. The value iteration algorithm is based on the fact that the dynamic programming algorithm converges to the optimal reward

$$J^* = \lim_{N \to \infty} J_{n+1}(s), \tag{9}$$

and can be obtained simply by turning the Bellman optimality equation into an update rule. Detailed discussion on the topic can be found in D. Bertsekas, Dynamic Programming and Optimal Control, 2nd ed. Belmont, MA: Athena Scientific, 2001, vol. 2.

The value iteration algorithm as described above is executed by the middleware block 50 on the device 10 to evaluate the optimal control policy $\mu^*(s)$ for the assignment of a flow to an access network. The state space $S$ is ascertained from the ABR and RTT measurements made by the middleware to the destination of a flow. $M(u)$ is evaluated by observing the state transitions associated with control actions.

Block 50 gives the flows on device 10 a token in a round robin fashion and the flow with the token seeks middleware consultation and is reassigned according to the control policy. Whenever a traffic flow is reassigned to a different network that it was previously on, it is provided a rate which is half of the ABR on that network. On the other hand, if the reassignment decision for a flow is to have it stay on the same network, the rate of the flow is increased by half of ABR on the network.

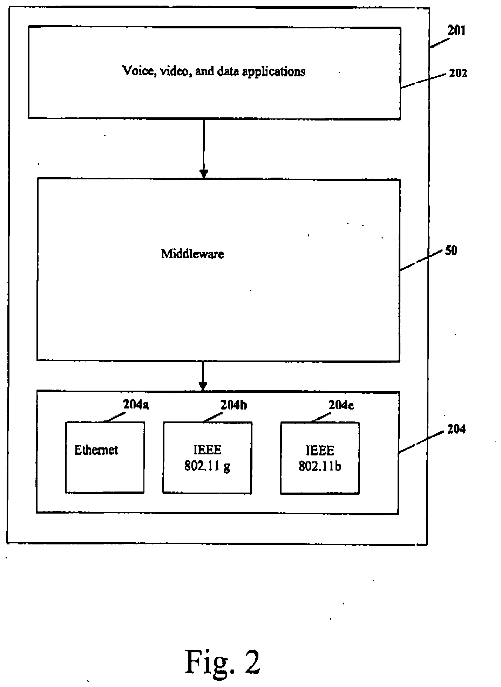

Fig. 2 shows an exemplary block diagram 201 of the device 10 shown in Fig. 1 for performing flow assignment method highlighted above. Device 10 comprises a device application module 202, middleware 50, and access network interfaces 204. The device application module 202 tracks the applications originating on the device 10 and retrieves flows via known methods, for instance via the source IP address, source port number, destinations IP address, destination port number, and as described, for instance, in F. Guo, J. Chen, W. Li, and T. Chiueh, "Experiences in building a multihoming load balancing system," in Proc. IEEE INFOCOM, 2004.

The middleware 50 performs flow assignment to appropriate interfaces in 204. Interfaces 204a, 204b, and 204c represent device interfaces to access networks 20, 30 and 40 which, for instance can be based on DSL, Ethernet, IEEE 802.11a, and IEEE 802.11g technologies.

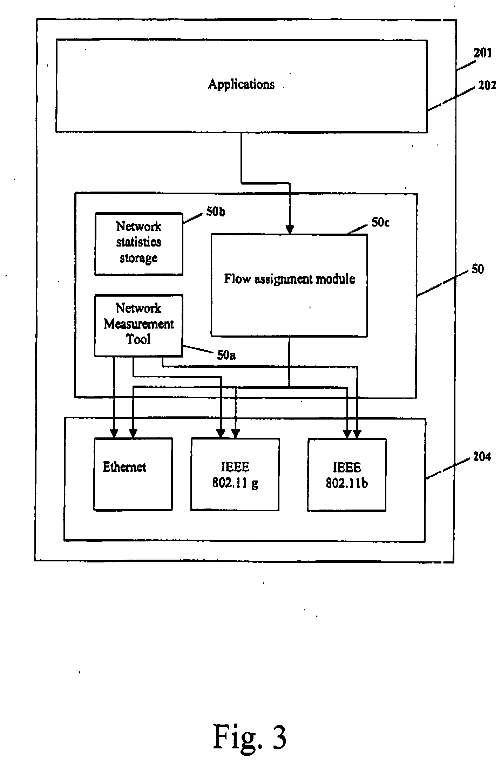

Fig. 3 shows the exemplary components of the middleware 50 of Fig. 2. Middleware 50 comprises a computational component 50a that runs a network measurement tool on the interfaces 204 for measuring the available bit rate and the delay on each access network 20, 30 and 40, a storage component 50b that stores the history of the measured available bit rate and delay values of each access network, and a computational facility 50c that runs the flow assignment policy which is on the MDP based optimal flow assignment discussed before and directs flows generated from the application module 202 to the appropriate interfaces 204.

To compare the result of the middleware according to the invention it is assumed that different flow assignment policies may be performed by block 50. For instance a static flow assignment policy which allocates newly admitted flows on suitable networks and does not' reassign them for the rest of their lifetime can be employed. In this case, the flows are admitted with a rate equal to the $r_{min}$ for their class. Thereafter the flows exercise an Additive Increase Multiplicative Decrease (AIMD) rate control for rate adaptation. Each flow increases its rate by $\Delta_r$ every $\Delta_t$ seconds unless network congestion is perceived by a flow in which case it drops its rate by $(r - r_{min})/2$. Two kinds of static flow assignment policies may be envisioned - one where the flows are assigned to networks in a greedy fashion and the other in proportion to the average ABRs of the networks. Under the former policy, a flow is assigned to a network that offers the maximum instantaneous reward (as given by equation (2)) to a flow upon its admission. We term this policy as greedy-AIMD. Under the other static assignment scheme, flows are allocated to different networks in proportion to the average ABR on the networks. We call this assignment scheme Rate Proportional AIMD (RP-AIMD).

In the subsequent section, we will compare the performance of the MDP based flow assignment policy described with a static flow assignment with

## Network measurements and modeling

In this section we present results from network measurements conducted in a real world setting. Employing the modeling framework of the previous section, we will use the measurement traces to simulate and evaluate the flow assignment framework in the subsequent sections.

We conduct measurement tests in a corporate work environment where the users have access to networks like Ethernet, IEEE 802.11g and IEEE 802.11b WLANs, GPRS, and DSL. We monitor the ABR and RTT on different networks between 2 pm and 4 pm on a work day. The tests are conducted between hosts in Deutsche Telekom Laboratories (T-Labs) in Berlin to three destinations - Stanford University, Technical University of Munich (TU Munich), and the Technical University of Berlin (TU Berlin) - respectively representing long, mid, and close distance destinations. We surveyed several publicly available tools including Pathrate, Nettest, CapProbe and choose Abing (J. Navratil and R. L. Cottrell. Abing. Available online: http://www-iepm.slac.stanford.edu/tools/abing/) for measurement of ABR and round trip time (RTT). Abing has a fast convergence of the order of 1-2 seconds, and the ability to run accurately on paths with high packet loss rates, and is hence reported to be suitable for wireless networks. It is based on packet pair dispersion technique and reports the ABR for bidirectional links between two hosts in the Internet which run Abing client and server.

Abing server is run at the machines at Stanford, TU Munich and TU Berlin, and the clients at machines in T-Labs in Berlin. The ABR and RTT values are then noted for the links from T-Labs and to different destinations.

For the purpose of this work we consider the data collected on 100 Mbps Ethernet, IEEE 802.11g, and IEEE 802.11b networks. The 802.11g and 802.11b networks were accessed by laptops with Intel PRO/Wireless 2200 b/g cards through T-Sinus 154 and linksys WRT-54GL wireless access points (APs) respectively.

TABLE I

AVAILABLE BIT RATE AND RTT FROM T-LABS TO STANFORD UNIVERSITY

|  |  | ABR(Mbps) | RTT(ms) |
|---|---|---|---|
| Ethernet | Avg. | 31.5 | 190.1 |
|  | Std. Dev. | 1.7 | 0.03 |
| 802.11g | Avg. | 15.1 | 193.0 |
|  | Std. Dev. | 3.6 | 3.2 |
| 802.11b | Avg. | 4.2 | 195.7 |
|  | Std. Dev. | 0.3 | 0.3 |

TABLE II

AVAILABLE BIT RATE AND RTT FROM T-LABS TO TU MUNICH

|  |  | ABR(Mbps) | RTT(ms) |
|---|---|---|---|
| Ethernet | Avg. | 90.8 | 14.4 |
|  | Std. Dev. | 6.0 | 0.1 |
| 802.11g | Avg. | 15.0 | 16.9 |
|  | Std. Dev. | 3.8 | 4.5 |
| 802.11b | Avg. | 4.4 | 19.8 |
|  | Std. Dev. | 0.4 | 1.0 |

TABLE III

AVAILABLE BIT RATE AND RTT FROM T-LABS TO TU BERLIN

|  |  | ABR(Mbps) | RTT(ms) |
|---|---|---|---|
| Ethernet | Avg. | 71.8 | 5.2 |
|  | Std. Dev. | 13.0 | 0.04 |
| 802.11g | Avg. | 14.3 | 7.8 |
|  | Std. Dev. | 3.6 | 0.4 |
| 802.11b | Avg. | 4.5 | 10.7 |
|  | Std. Dev. | 0.5 | 0.6 |

The test environment represented a well provisioned wireless LAN setting with 5 APs in a large office room. The measured networks had interference from other APs in the room and also APs from the higher and lower floors in the building. Tables I, II and III show the average ABR and RTT and their standard deviations to different destinations and for different networks for the 2 hour traces. Ethernet can be seen to have different ABRs to different destinations which can be attributed to different cross-traffic and intermediate bottleneck link capacities to these destinations. However, the average bit rates to different destinations are not much different for 802.11g and 802.11b indicating the possibility that ABR is constrained by the bottleneck wireless hop. RTTs to a destination are lowest for Ethernet and highest for 802.11b.

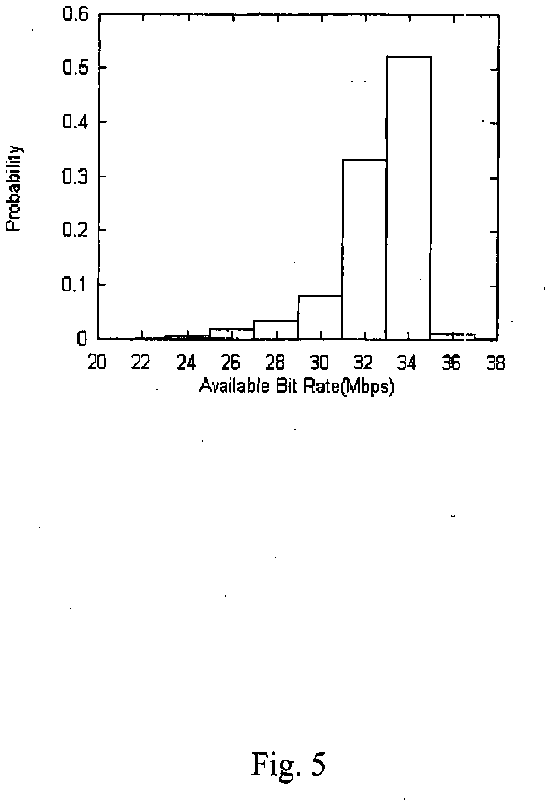

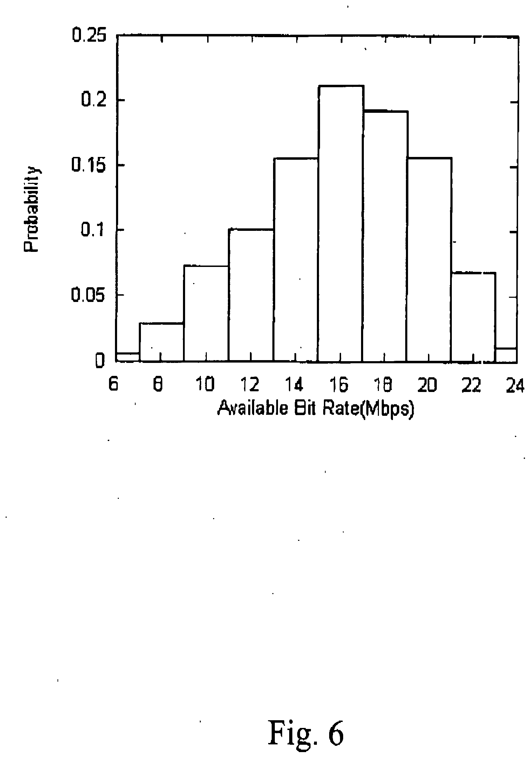

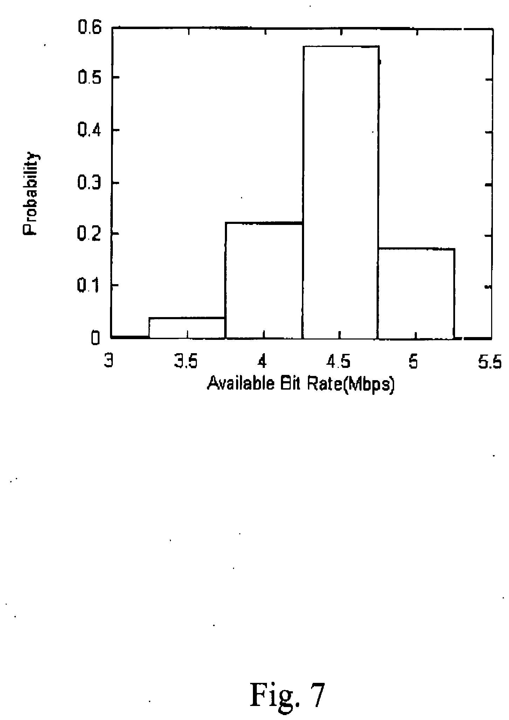

Figs. 5, 6 and 7 show representative histograms of the available bit rates for the destination Stanford. The statistics can be seen to have diversity in ABRs across the three networks wherein the average ABR on Ethernet can be seen from Table I to be twice as much as on 802.11g which is roughly four times as much for 802.11b. All the networks display noticeable variation in ABRs. For instance the available bit rate ABR on 802.11g can be as high as 24 Mbps and can drop down to as low as 6 Mbps.

The different ABRs on the networks reflect the difference in the ability of these networks in accommodating traffic flow volumes. Flows may be assigned to the networks according to their ABRs. However, as the charactaristics of a given network fluctuate for instance when there are abrupt drops in ABR, the supported applications nay suffer from performance degradation. Then, if some of the traffic flows under adverse network conditions can be directed to another network, the performance of the applications and utilization of the networks can be improved.

It is to be noted that the scale of variation of ABR and delay was much greater for the wireless networks than for Ethernet, which justifies the use of MDP based stochastic modeling over a simpler approach when the access environment includes wired and wireless networks. For instance the average interval of variation of ABR by 10% was 10 times higher for 802.11b and 3 times higher for 802.11g than the ABR variation over Ethernet for T-Labs to Stanford case.

**Performance Evaluation**

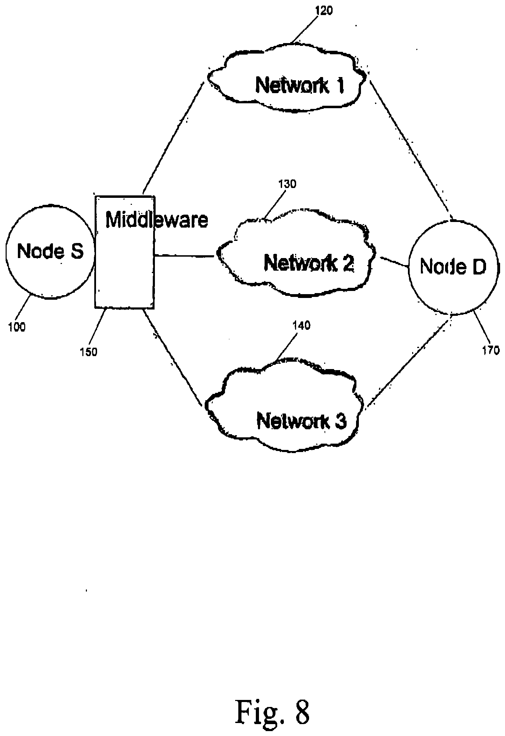

We now consider the simulation of the flow assignment framework using ns-2. The sample network topology created for the purpose is shown in Fig. 8. A node 100 represents the sending device which is adapted to send traffic flows to a destination node 170 via three access networks 120, 130 and 140 using the dynamical flow assignment approach according to the invention. The functionality of the components and the tools employed are described below.

1) Simulation of Access Networks : Each network 120, 130 and 140 is simulated as a link with varying available bit rate and delay characteristics. These network characteristics are obtained from the practical measurements performed in real networks settings.

2) Flow Assignment : An instance of hash classifier as described in the documentation of the network simulator (ns-2), which is available online: http://www.isi.edu/ns/ is attached to node 100 performing flow routing and is used to simulate a broke*r* whose function is to direct various flows to the different networks 120, 130 and 14C based on the policy calculated by the middleware 150. Part of the middleware functionality has been implemented by interfacing python functions with ns-2. The middleware 150 for device 100 measures the available bit rate and delay values on the networks 120, 130 and 140, and performs the flow assignment using MDP. The flows at node 100 are identified via *flow ids.* It is ensured that the broker agent attached to the node 100 has information about every flow generated from the source and coming to the source from the Internet.

3) Network delay measurement: We employ CapProbe implementation for ns-2 to calculate RTT of networks (U. N. R. Laboratory, CapProbe which is available online: http://www.cs.ucla.edu/NRL/CapProbe/). For this purpose, we attach a ping agent for every network 120, 130 and 140 to be monitored to the node 100 performing flow assignment and associate every ping agent with a flow id to be used by the hash classifier for routing the ping traffic.

4) ABR Measurement : The available bit rate of each network utilized at a given time is measured during the simulation via queue monitors as described in the documentation of the network simulator (ns-2) (Available: http://www.isi.edu/ns/). The number of bytes transferred via the link of each network during a 0.1 second interval is used to calculate the used bandwidth. The available bit rate during the simulation is periodically evaluated by subtracting the network bandwidth being used from the present value of ABR used to characterize the network. In real world scenarios, tools like Abing can be used to measure the available bit rate.

For the demonstration of evaluation results, the three networks 120, 130 and 140 shown in the ns-2 topoLogy of Fig. 8 are taken as Ethernet, 802.11g, and 802.11b with ABR ($r$) and delay ($d$) characteristics. The delay $d$ is approximated as half of RTT values measured for the different networks. Simulations are run over the 2 hour data traces for different destinations. For the 302.11b and 802.11g wireless networks a 1% random packet loss has been introduced in the simulations.

High bit rate flows are employed with the network characteristics of equation (3) with $r_{min}$ = 2 Mbps and $T$ = 150 ms. At the beginning of a simulation, a total of 14 flows arrive with a rate of 2 Mbps each and an inter-arrival time of 0.5 seconds. Subsequently the rates of the flows evolve as per the rate control associated with the employed flow assignment policy. The middleware monitors the available bit rate and the round trip time to the destination host 170 via each network 120, 130 and 140 periodically.

For the greedy-AIMD policy, a flow upon its arrival is allocated to a network that offers the maximum instantaneous reward given by (2). For RP-AIMD, flows are allocated to networks in proportion to the average ABR reported in Tables I, II, and III. For these static policies, the available bit rate of each flow is varied according to a token-based round-robin scheme where the token is circulated every 2 seconds. The round robin scheme operates separately and independently on each network. The flow with a token on a given network increases its flow rate by $\Delta_r$ = 1 Mbps and passes the token to the next flow on the network. Whenever a delay rise beyond the preset threshold, $d_t$ = 150 ms, is observed by CapProbe measurement tool for any of the networks, a delay alarm for that access network is triggered, and the bit rate for the flow is reduced by $(r\text{-}r_{min})/2$.

This cooperative rate allocation scheme ensures efficient utilization of the network available bit rates while preventing excessive rate fluctuations for the flows.

For the MDP based flow assignment, the parameter $\beta$ value in equation (1) is selected as 0.8. We will discuss more about the selection of $\beta$ later on in the invention. When the flows initially arrive, they are greedily allocated to the networks based on the maximum reward. Thereafter, the reassignment and rate allocation of the flows is done via a round robin token scheme with a token circulation interval of 2 seconds. Every time during a simulation a flow gets a token, the optimal MDP policy in the middleware 150 is consulted by the broker, the control action suggesting a suitable interface for the flow is executed, and rate allocation for the flow is performed.

For evaluating the MDP policy, the middleware needs information about the system state transitions vis-a-vis the control actions. For the purpose we maintain a sliding window of last 800 transitions and action tuples. The state transitions associated with an action are ascertained as those occurring from the state at the time of the control action to the states visited before the next action.

Before the MDP based flow assignment can be invoked for the first time by the middleware, MDP needs a training period to evaluate $M(u)$. We hence train the MDP in the middleware for initial 100 seconds with $u$ based on a reward-maximizing greedy approach for network selection. The rate allocation during this phase is kept the same as that discussed in the analytical framework under MDP based flow assignment, i.e. if as a consequence of a control action a flow is reassigned to a different network than it was previously on, then it is provided a rate which is half of ABR on the new network, otherwise the rate of the flow is increased by half of ABR of the present network.

With the simulation methodology described above, the performance of the static policies is compared with dynamic MDP based approach. First, the performance of flow assignment schemes for T-Labs to Stanford hosts is discussed. While the MDP based approach dynamically assigns the flows to different networks during the simulation, the greedy-AIMD policy leads to an allocation of 11, 3, and 0 flows on the Ethernet, 802.11g and 802.11b respectively and the RP-AIMD leads to a distribution of 9, 4, and 1 flows on the networks.

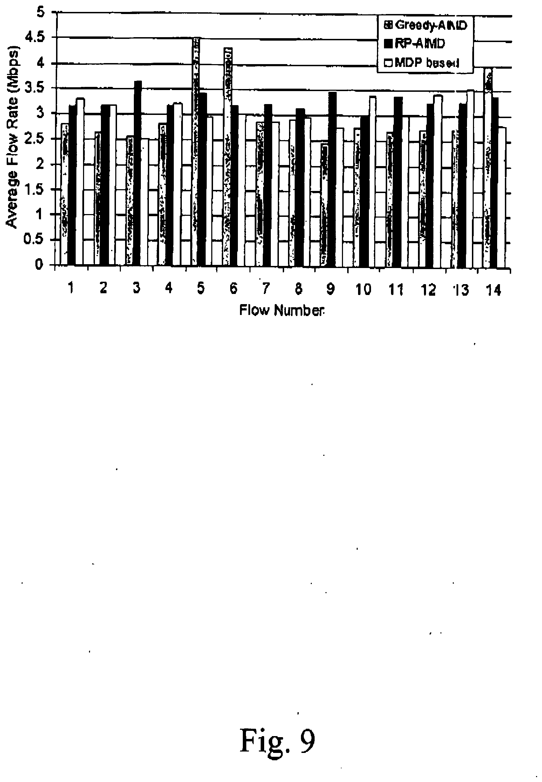

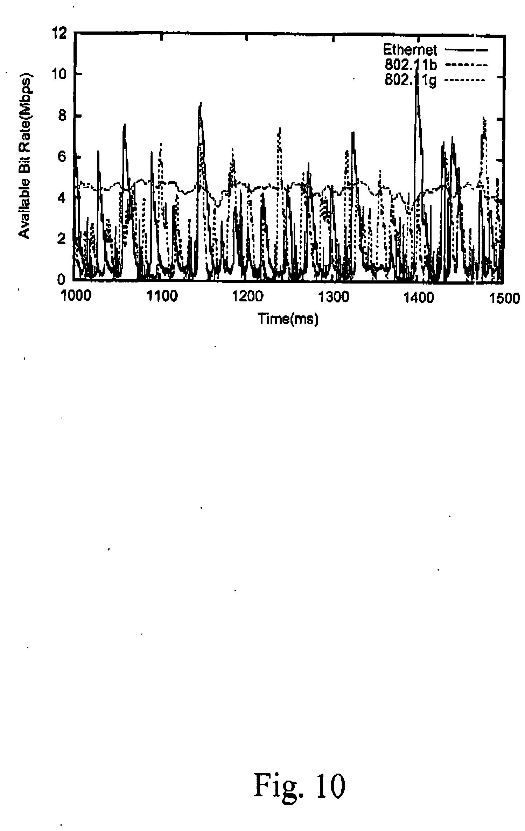

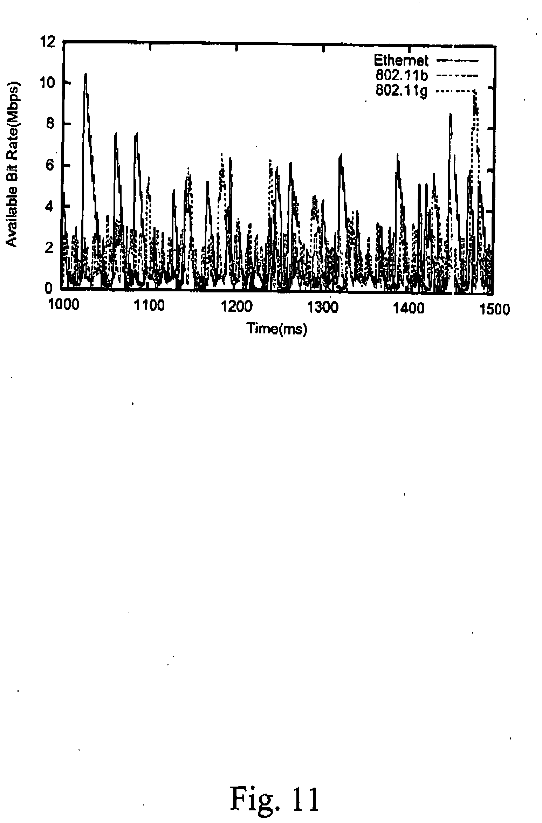

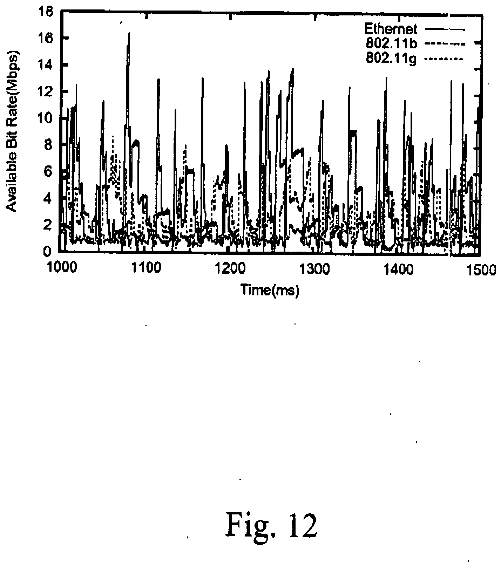

Fig. 9 shows the average rate of flows during the simulation run for different flow assignment schemes. Figs 10, 11 and 12 respectively plot the ABR for different networks in a window from 1000 to 1500 seconds of simulation run. As apparent from Fig. 10, the bandwidth on the IEEE 802.11b network for the greedy-AIMD remains unutilized as no flow is assigned to the network.

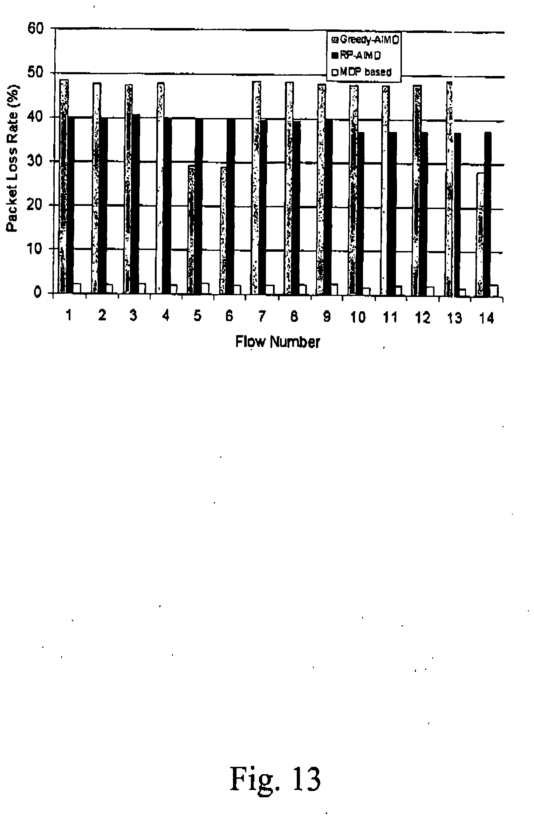

The packet loss rate during a simulation run for different flow assignment schemes is compared in Fig. 13. Tables IV shows the average of packet loss rate and flows rate for the 14 flows. The greedy-AIMD policy results in a higher average flow rate and hence suffers a high packet loss rate. As can be seen in Fig. 13 and Table IV, the MDP based flow assignment policy leads to a reduction of packet loss rate from around 45% for Greedy-AIMD and 40% for RP-AIMD to a significantly lower 2%.

## TABLE IV

### PACKET LOSS RATE (PLR) AND FLOW RATE STATISTICS FOR STANFORD UNIVERSITY

|  | Greedy AIMD | RP AIMD | MDP |
|---|---|---|---|
| Avg. PLR(%) | 43.69 | 38.74 | 1.78 |
| Avg. ABR(Mbps) | 2.77 | 1.76 | 2.7 |

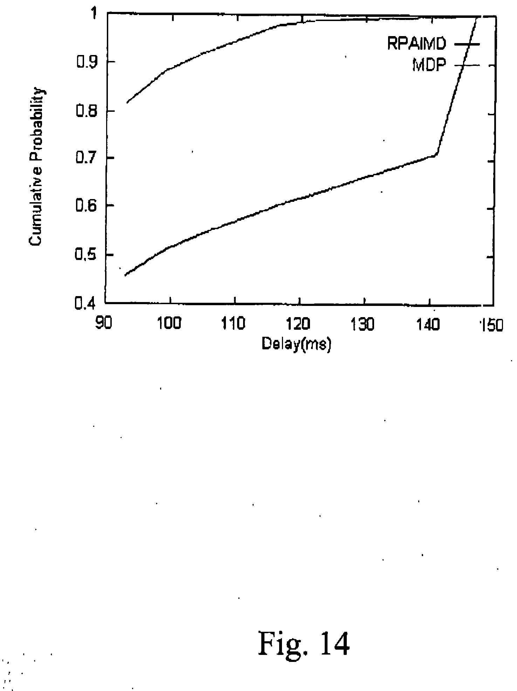

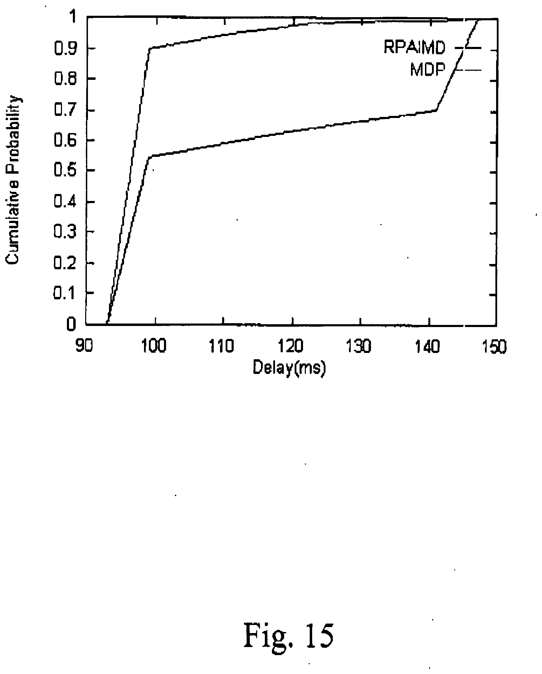

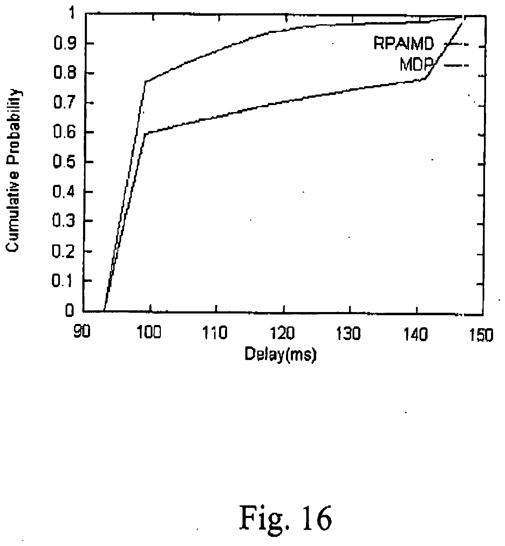

The MDP based flow assignment leads to significantly lower delays on all three networks. The cdfs (cumulative distribution functions) of the delays (truncated at 150 ms, the playout deadline for the flows) for greedy-FP and MDP based flow assignment are plotted in Fig. 14, 15 and 16. For greedy-AIMD, the delay performance is further worse than RP-AIMD on Ethernet and 802.11g networks; however delays are low for this scheme on 802.11b since no flows are allocated to the network.

Next the performance for T-Labs to TU Munich anc TU Berlin cases is discussed. Since Ethernet for TU Munich and TU Berlin cases has high ABRs (see Tables II and III) the greedy-AIMD policy leads to assignment of all flows to Ethernet as they arrive. The RP-AIMD results in a respective distribution of {12,2,0} and {11,2,1} flows on {Ethernet, 802.11g, 802.11b} networks for TU Murich and TU Berlin cases. As before, the MDP based approach dynamically assigns flows to networks during the simulation runs.

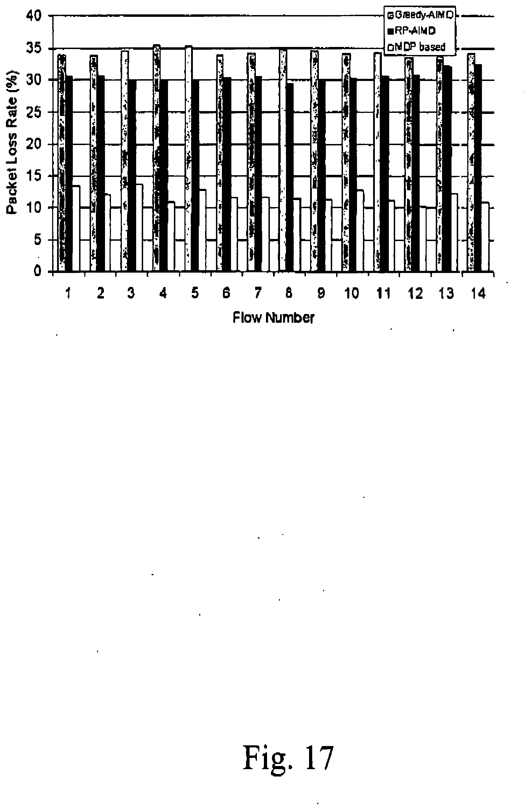

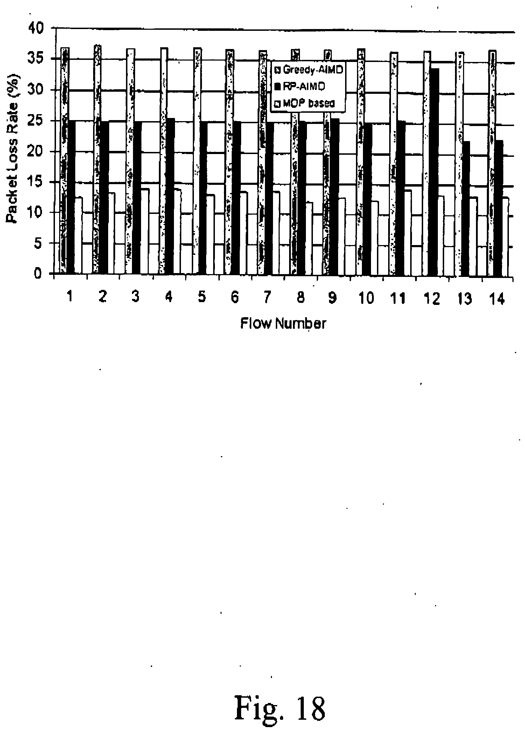

The packet loss rates for T-Labs to TU Munich and TU Berlin cases are shown in Figs 17 and 18.

Tables V and VI show the average packet loss rate and flows rate for the 14 flows for the destinations TU Munich and TU Berlin. While the greedy-AIMD policy suffers from high packet loss rates for all cases, MDP based flow assignment leads to the significantly lower packet loss rates. Again, the delay performance of the MDP based flow assignment scheme is better than the static policies and; the plots are suppressed for brevity.

## TABLE V

### PACKET LOSS RATE (PLR) AND FLOW RATE STATISTICS FOR TU MUNICH

|  | Greedy AIMD | RP AIMD | MDP |
|---|---|---|---|
| Avg. PLR(%) | 34.21 | 30.56 | 11.88 |
| Avg. ABR(Mbps) | 8.87 | 5.21 | 5.19 |

## TABLE VI

### PACKET LOSS RATE (PLR) AND FLOW RATE STATISTICS FOR TU BERLIN

|  | Greedy AIMD | RP AIMD | MDP |
|---|---|---|---|
| Avg. PLR(%) | 36.82 | 33.49 | 13.15 |
| Avg. ABR(Mbps) | 9.78 | 5.46 | 6.22 |

The impact of variation of playout deadline (T) on the packet loss rate performance for the TU Berlin case is shown in Table VII. Increase in the deadline leads to significant reduction in packet loss rate for MD? based flow assignment, but does not have as noticeable an impact for the greedy-AIMD and RP-AIMD policies.

TABLE VII

| IMPACT OF THE PLAYOUT DEADLINE | | | |
|---|---|---|---|
| T(ms) | Greedy AIMD | RP AIMD | MDP |
| 150 | 36.82 | 33.49 | 13.15 |
| 250 | 31.25 | 25.38 | 3.55 |
| 500 | 22.00 | 20.48 | 0.26 |

Multiple network utilization via a flow allocation policy which stochastically characterizes the network characteristics and dynamically assigns flows tc the networks results in significantly enhanced performance over a static policy which assign flows based on heuristics like average ABR on the networks. Even in conjunction with a suitable rate control scheme, a static flow allocation policy suffers from degraded performance owing to the fact that network characteristics like ABR and delay vary to fluctuations in cross-traffic and changes in the channel characteristics for wireless networks.

A dynamic flow assignment policy is able to utilize the diversity of available networks to enhance the QoS provisioning for applications. For instance when ABR on a network drops or the delay shoots up, flows on the network may be reassigned to another network which may be experiencing a better network quality. An MDP based dynamical flow assignment presented in this work is demonstrated to result in better performance in terms of packet delays and packet loss rates experienced by applications, and bandwidth utilization for different networks.

We observed a tradeoff between selfish and global good as represented by the value of $\beta$ in equation (1). For low values of $\beta$ representing a higher concern for characteristics of other interfaces than the one associated with the control action, the flows did not always drive the system to a state where they received a good reward on a network dictated by the control action, and this lead to bandwidth wastage. On the other hand, overtly selfish behavior ($\beta=1$) pushed the system into high delay states as the flows would eagerly choose a state that maximized their reward even if the state represented high delays and low ABR for the other interfaces.

A noticeable aspect is the ability of MDP based flow assignment to offer low packet loss rates while allowing the flows to have their share of bit rates on different networks. Other policies (RP-AIMD and greedy-AIMD) are unable to keep the packet loss rate within acceptable limits. Hence, the MDP based flow assignment can easily guarantee acceptable PSNRs for multimedia flows whose performance depends on the bit rate and the packet loss. Again, as the deadlines for packet delivery becomes less stringent, the flow assignment policy results in a significant reduction in packet loss rates (Table VII).

In a setting where devices have access to multiple networks, the distribution of traffic flows amongst different networks can enable better network utilization than single network use at a time. However, the variation in network characteristics like ABR and delay make the problem of flow assignment challenging. A static flow allocation policy can result in unsatisfactory performance due varying characteristics of networks. However, the adaptive assignment of flows to different access networks results in a much better performance in terms of packet losses, delays and allocated bit rates. Such adaptive flow reassignment according to the invention is controlled by using stochastic characterization of the networks and adopting an MDP based approach to optimally assign flows to networks.

**Claims**

1. A method for dynamically assigning traffic flows to a plurality of access networks, wherein the traffic flows are provided by a source having multiple access networking capabilities, the method comprising the steps of:

   a) measuring at given time intervals predetermined network characteristics of a plurality of access networks,
   b) estimating the network characteristic variation behavior of each access network of the plurality of access networks using the measured network characteristics,
   c) detecting a traffic flow of at least one application running at a source to be transmitted from a source to a destination,
   d) in response to the identified traffic flow selecting an access network from the plurality of access networks by using the network characteristic variation behavior of the plurality of access networks,
   e) repeating steps c) and d) every time the application provides a traffic flow to be transmitted, **characterized in that** step d) uses a Markov decision process to select an access network for the identified traffic flow, and wherein each traffic flow is reassigned at predetermined times to a selected one of the plurality of access networks.

2. The method of claim 1, wherein the predetermined network characteristics comprise the available bit rate and the round trip time of each access network.

3. The method of any one of the preceding claims, wherein step b) uses a stochastic model to define the network characteristic variation behavior of the plurality of access networks.

4. The method of any one of the preceding claims, wherein step b) uses a Markov model to define the network characteristic variation behavior of the plurality of access networks.

5. The method of any one of the preceding claims, wherein the reward of each access network for the identified traffic flow is determined and in step d) the optimal access network is selected as a function of the determined reward values.

6. The method of claim 5, wherein,
   the step of determining the reward comprises the step of classifying the detected traffic flow.

7. The method of claim 5, wherein,
   the step of determining the reward comprises the step of categorizing the performance, in particular the peak signal to noise ratio, of the detected traffic flow according as per the network characteristics.

8. A communication system for dynamically assigning traffic flows to a plurality of access networks, comprising
   a plurality of access networks (20, 30, 40) connected to a core network (60),
   at least a source device (10), which comprises multiple access networking interfaces (204) each associated with a separate access network of the plurality of access networks,
   means (50a) for measuring at given time intervals predetermined network characteristics of each access network (20, 30, 40),
   storing means (50b) for storing the measured network characteristics,
   means (50c) for estimating the network characteristic variation behavior of each access network of the plurality of access networks using the measured network characteristics,
   means (50c) for detecting a traffic flow of at least one application (202) running at the source device (10) to be transmitted to a destination,
   means (50c) for selecting in response to the detected traffic flow an access network from the plurality of access networks by using the network characteristic variation behavior of the plurality of access networks, **characterized in that** the selecting means (50c) uses a Markov decision process to select an access network for the identified traffic flow, and wherein the selecting means (50c) is adapted to reassign each traffic flow at predetermined times to a selected one of the plurality of access networks.

9. The communication system of claim 8, comprising means for allowing an application (202) running at the source device (10) to transmit a traffic flow and to invoke the detecting means (50c).

10. The communication system claims 8 or 9, wherein the predetermined network characteristics comprise the available bit rate and the round trip time of each access network.

11. The communication system of any one of the claims 8 to 10, wherein the estimation means (50c) uses a stochastic model to define the network characteristic variation behavior of the plurality of access networks.

12. The communication system of any one of the claims 8 to 10, wherein the estimation means (50c) uses a Markov model to define the network characteristic variation behavior of the plurality of access networks.

13. The communication system of any one of the claims 8 to 12, **characterized by**
means for determining the reward of each access network (20, 30, 40) for the identified traffic flow, wherein the optimal access network is selected as a function of the determined reward values.

14. A device for use within a communication system according to any one of the claim 8 to 13, comprising at least a source device (10), which comprises:

multiple access networking interfaces (204) each associated with a separate access network of a plurality of access networks (20, 30, 40),
means (50a) for measuring at given time intervals predetermined network characteristics of each access network (20, 30, 40),
storing means (50b) for storing the measured network characteristics,
means (50c) for estimating the network characteristic variation behavior of each access network of the plurality of access networks using the measured network characteristics,
means (50c) for detecting a traffic flow of at least one application (202) running at the source device (10) to be transmitted to a destination,
means (50c) for selecting in response to the detected traffic flow an access network from the plurality of access networks by using the network characteristic variation behavior of the plurality of access networks, **characterized in that** the selecting means (50c) uses a Markov decision process to select an access network for the identified traffic flow, and wherein the selecting means (50c) is adapted to reassign each traffic flow at predetermined times to a selected one of the plurality of access networks.


**Patentansprüche**

1. Verfahren zum dynamischen Zuweisen von Verkehrsflüssen zu einer Mehrzahl von Zugangsnetzen, wobei die Verkehrsflüsse durch eine Quelle bereitgestellt werden, die mehrere Netzzugangsfähigkeiten aufweist, wobei das Verfahren folgende Schritte umfasst:

a) Messen von vorgegebenen Netzwerkeigenschaften einer Mehrzahl von Zugangsnetzen in vorgegebenen Zeitabständen,
b) Schätzen des Netzwerkeigenschafts-Schwankungsverhaltens jedes Zugangsnetzes der Mehrzahl von Zugangsnetzen unter Verwendung der gemessenen Netzwerkeigenschaften,
c) Detektieren eines Verkehrsflusses wenigstens einer Anwendung, die auf einer Quelle ausgeführt wird, der von einer Quelle zu einem Ziel übertragen werden soll,
d) in Reaktion auf den detektierten Verkehrsfluss, Auswählen eines Zugangsnetzes aus der Mehrzahl von Zugangsnetzen unter Verwendung des Netzwerkeigenschafts-Schwankungsverhaltens der Mehrzahl von Zugangsnetzen,
e) jedes Mal, wenn die Anwendung einen zu übertragenden Verkehrsfluss bereitstellt, Wiederholen der Schritte c) und d)

**dadurch gekennzeichnet, dass**
in Schritt d) ein Markov-Entscheidungsprozess verwendet wird, um ein Zugangsnetz für den identifizierten Verkehrsfluss auszuwählen, und wobei jeder Verkehrsfluss zu vorgegebenen Zeiten neu einem ausgewählten aus der Mehrzahl von Zugangsnetzen zugewiesen wird.

2. Verfahren nach Anspruch 1, wobei die vorgegebenen Netzwerkeigenschaften die verfügbare Bitrate und die Umlaufzeit jedes Zugangsnetzes umfassen.

3. Verfahren nach einem der vorhergehenden Ansprüche, wobei in Schritt b) ein stochastisches Modell verwendet wird, um das Netzwerkeigenschafts-Schwankungsverhalten der Mehrzahl von Zugangsnetzen zu definieren.

4. Verfahren nach einem der vorhergehenden Ansprüche, wobei in Schritt b) ein Markov-Modell verwendet wird, um das Netzwerkeigenschafts-Schwankungsverhalten der Mehrzahl von Zugangsnetzen zu definieren.

5. Verfahren nach einem der vorhergehenden Ansprüche, wobei der Nutzen jedes Zugangsnetzes für den identifizierten Verkehrsfluss bestimmt wird und in Schritt d) das optimale Zugangsnetz in Abhängigkeit von den für den Nutzen bestimmten Werten ausgewählt wird.

6. Verfahren nach Anspruch 5, wobei
der Schritt des Bestimmens des Nutzens den Schritt des Klassifizierens des detektierten Verkehrsflusses umfasst.

7. Verfahren nach Anspruch 5, wobei
der Schritt des Bestimmens des Nutzens den Schritt des Kategorisierens des Leistungsverhaltens, insbesondere des Spitzen-Signal-Rausch-Verhältnisses des detektierten Verkehrsflusses gemäß den Netzwerkeigenschaften umfasst.

8. Kommunikationssystem zum dynamischen Zuweisen von Verkehrsströmen zu einer Mehrzahl von Zugangsnetzen, umfassend:

eine Mehrzahl von Zugangsnetzen (20, 30, 40), die mit einem Kernnetz (60) verbunden sind,
mindestens ein Quellengerät (10), das mehrere Netzzugangsschnittstellen (204) umfasst, von denen jedes jeweils einem separaten Zugangsnetz der Mehrzahl von Zugangsnetzen zugeordnet ist,
eine Einrichtung (50a) zum Messen von vorgegebenen Netzwerkeigenschaften jedes Zugangsnetzes (20, 30, 40) in vorgegebenen Zeitabständen,
eine Speichereinrichtung (50b) zum Speichern der gemessenen Netzwerkeigenschaften,
eine Einrichtung (50c) zum Schätzen des Netzwerkeigenschafts-Schwankungsverhaltens für jedes Zugangsnetz der Mehrzahl von Zugangsnetzen unter Verwendung der gemessenen Netzwerkeigenschaften,
eine Einrichtung (50c) zum Detektieren eines Verkehrsflusses wenigstens einer Anwendung (202), die auf dem Quellengerät (10) ausgeführt wird, welcher zu einem Ziel übertragen werden soll,
eine Einrichtung (50c) zum Auswählen, in Reaktion auf den detektierten Verkehrsfluss, eines Zugangsnetzes aus der Mehrzahl von Zugangsnetzen unter Verwendung des Netzwerkeigenschafts-Schwankungsverhaltens der Mehrzahl von Zugangsnetzen,
**dadurch gekennzeichnet, dass**
die Auswahleinrichtung (50c) einen Markov-Entscheidungsprozess verwendet, um ein Zugangsnetz für den identifizierten Verkehrsfluss auszuwählen, und wobei die Auswahleinrichtung (50c) dazu ausgebildet ist, jeden Verkehrsfluss zu vorgegebenen Zeiten neu einem ausgewählten aus der Mehrzahl von Zugangsnetzen zuzuweisen.

9. Kommunikationssystem nach Anspruch 8, umfassend eine Einrichtung, um einer auf dem Quellengerät (10) laufenden Anwendung (202) zu ermöglichen, einen Verkehrsfluss zu übertragen und die Detektionseinrichtung (50c) aufzurufen.

10. Kommunikationssystem nach Anspruch 8 oder 9, wobei die vorgegebenen Netzwerkeigenschaften die verfügbare Bitrate und die Umlaufzeit jedes Zugangsnetzes umfassen.

11. Kommunikationssystem nach einem der Ansprüche 8 bis 10, wobei die Schätzeinrichtung (50c) ein stochastisches Modell verwendet, um das Netzeigenschafts-Schwankungsverhalten der Mehrzahl von Zugangsnetzen zu definieren.

12. Kommunikationssystem nach einem der Ansprüche 8 bis 10, wobei die Schätzeinrichtung (50c) ein Markov-Modell verwendet, um das Netzeigenschafts-Schwankungsverhalten der Mehrzahl von Zugangsnetzen zu definieren.

**13.** Kommunikationssystem nach einem der Ansprüche 8 bis 12, **gekennzeichnet durch** eine Einrichtung zum Bestimmen des Nutzens jedes Zugangsnetzes (20, 30, 40) für den identifizierten Verkehrsfluss, wobei das optimale Zugangsnetz in Abhängigkeit von den für den Nutzen bestimmten Werten bestimmt wird.

**14.** Vorrichtung zur Verwendung in einem Kommunikationssystem nach einem der Ansprüche 8 bis 13, welche zumindest ein Quellengerät (10) umfasst, welches umfasst:

mehrere Netzzugangsschnittstellen (204), von denen jedes jeweils einem separaten Zugangsnetz einer Mehrzahl von Zugangsnetzen (20, 30, 40) zugeordnet ist,
eine Einrichtung (50a) zum Messen von vorgegebenen Netzwerkeigenschaften jedes Zugangsnetzes (20, 30, 40) in vorgegebenen Zeitabständen,
eine Speichereinrichtung (50b) zum Speichern der gemessenen Netzwerkeigenschaften,
eine Einrichtung (50c) zum Schätzen des Netzwerkeigenschafts-Schwankungsverhaltens für jedes Zugangsnetz der Mehrzahl von Zugangsnetzen unter Verwendung der gemessenen Netzwerkeigenschaften,
eine Einrichtung (50c) zum Detektieren eines Verkehrsflusses wenigstens einer Anwendung (202), die auf dem Quellengerät (10) ausgeführt wird, welcher zu einem Ziel übertragen werden soll,
eine Einrichtung (50c) zum Auswählen, in Reaktion auf den detektierten Verkehrsfluss, eines Zugangsnetzes aus der Mehrzahl von Zugangsnetzen unter Verwendung des Netzwerkeigenschafts-Schwankungsverhaltens der Mehrzahl von Zugangsnetzen,
**dadurch gekennzeichnet, dass**
die Auswahleinrichtung (50c) einen Markov-Entscheidungsprozess verwendet, um ein Zugangsnetz für den identifizierten Verkehrsfluss auszuwählen, und wobei die Auswahleinrichtung (50c) dazu ausgebildet ist, jeden Verkehrsfluss zu vorgegebenen Zeiten neu einem ausgewählten aus der Mehrzahl von Zugangsnetzen zuzuweisen.

## Revendications

**1.** Procédé d'attribution dynamique de flux de trafic à une pluralité de réseaux d'accès, dans lequel les flux de trafic sont fournis par une source ayant des capacités de mise en réseau à accès multiple, le procédé comprenant les étapes consistant à :

a) mesurer à des intervalles de temps donnés des caractéristiques de réseau prédéterminées d'une pluralité de réseaux d'accès,
b) estimer le comportement de variation de caractéristiques de réseau de chaque réseau d'accès de la pluralité de réseaux d'accès en utilisant les caractéristiques de réseau mesurées,
c) détecter un flux de trafic d'au moins une application s'exécutant au niveau d'une source devant être transmis d'une source vers une destination,
d) sélectionner, en réponse au flux de trafic identifié, un réseau d'accès parmi la pluralité de réseaux d'accès en utilisant le comportement de variation de caractéristiques de réseau de la pluralité de réseaux d'accès,
e) répéter les étapes c) et d) chaque fois que l'application fournit un flux de trafic à transmettre,

**caractérisé en ce que** :
l'étape d) utilise un processus de décision de Markov pour sélectionner un réseau d'accès pour le flux de trafic identifié, et où chaque flux de trafic est réattribué à des instants prédéterminés à un réseau sélectionné de la pluralité de réseaux d'accès.

**2.** Procédé de la revendication 1, dans lequel les caractéristiques de réseau prédéterminées comprennent le débit binaire disponible et le temps aller-retour de chaque réseau d'accès.

**3.** Procédé de l'une quelconque des revendications précédentes, dans lequel l'étape b) utilise un modèle stochastique pour définir le comportement de variation de caractéristiques de réseau de la pluralité de réseaux d'accès.

**4.** Procédé de l'une quelconque des revendications précédentes, dans lequel l'étape b) utilise un modèle de Markov pour définir le comportement de variation de caractéristiques de réseau de la pluralité de réseaux d'accès.

**5.** Procédé de l'une quelconque des revendications précédentes, dans lequel la récompense de chaque réseau d'accès pour le flux de trafic identifié est déterminée et à l'étape d) le réseau d'accès optimal est sélectionné en fonction des valeurs de récompense déterminée.

6. Procédé de la revendication 5, dans lequel, l'étape de détermination de la récompense comprend l'étape de classification du flux de trafic détecté.

7. Procédé de la revendication 5, dans lequel l'étape de détermination de la récompense comprend l'étape de catégorisation des performances, en particulier le rapport signal de crête sur bruit, du flux de trafic détecté selon les caractéristiques de réseau.

8. Système de communication d'attribution dynamiquement de flux de trafic à une pluralité de réseaux d'accès, comprenant :

une pluralité de réseaux d'accès (20, 30, 40) connectés à un réseau central (60),
au moins un dispositif source (10), qui comprend des interfaces de mise en réseau à accès multiple (204), chacune étant associée à un réseau d'accès séparé de la pluralité de réseaux d'accès,
un moyen (50a) pour mesurer, à des intervalles de temps donnés, des caractéristiques de réseau prédéterminées de chaque réseau d'accès (20, 30, 40),
un moyen de stockage (50b) pour stocker les caractéristiques de réseau mesurées,
un moyen (50c) pour estimer le comportement de variation de caractéristiques de réseau de chaque réseau d'accès de la pluralité de réseaux d'accès en utilisant les caractéristiques de réseau mesurées,
un moyen (50c) pour détecter un flux de trafic d'au moins une application (202) s'exécutant au niveau du dispositif source (10) devant être transmis à une destination,
un moyen (50c) pour sélectionner, en réponse au flux de trafic détecté, un réseau d'accès parmi la pluralité de réseaux d'accès en utilisant le comportement de variation de caractéristiques de réseau de la pluralité de réseaux d'accès,
**caractérisé en ce que** :
le moyen de sélection (50c) utilise un processus de décision de Markov pour sélectionner un réseau d'accès pour le flux de trafic identifié, et où le moyen de sélection (50c) est conçu pour réattribuer chaque flux de trafic à des instants prédéterminés à un réseau sélectionné de la pluralité de réseaux d'accès.

9. Système de communication de la revendication 8, comprenant un moyen permettant à une application (202) s'exécutant au niveau du dispositif source (10) de transmettre un flux de trafic et d'invoquer le moyen de détection (50c).

10. Système de communication de la revendication 8 ou 9, dans lequel les caractéristiques de réseau prédéterminées comprennent le débit binaire disponible et le temps aller-retour de chaque réseau d'accès.

11. Système de communication de l'une quelconque des revendications 8 à 10, dans lequel le moyen d'estimation (50c) utilise un modèle stochastique pour définir le comportement de variation de caractéristiques de réseau de la pluralité de réseaux d'accès.

12. Système de communication de l'une quelconque des revendications 8 à 10, dans lequel le moyen d'estimation (50c) utilise un modèle de Markov pour définir le comportement de variation de caractéristiques de réseau de la pluralité de réseaux d'accès.

13. Système de communication de l'une quelconque des revendications 8 à 12, **caractérisé par** un moyen pour déterminer la récompense de chaque réseau d'accès (20, 30, 40) pour le flux de trafic identifié, où le réseau d'accès optimal est sélectionné en fonction des valeurs de récompense déterminée.

14. Dispositif pour une utilisation dans un système de communication selon l'une quelconque des revendications 8 à 13, comprenant au moins un dispositif source (10), qui comprend :

des interfaces de mise en réseau à accès multiple (204), chacune étant associée à un réseau d'accès séparé d'une pluralité de réseaux d'accès (20, 30, 40),
un moyen (50a) pour mesurer, à des intervalles de temps donnés, des caractéristiques de réseau prédéterminées de chaque réseau d'accès (20, 30, 40),
un moyen de stockage (50b) pour stocker les caractéristiques de réseau mesurées,
un moyen (50c) pour estimer le comportement de variation de caractéristiques de réseau de chaque réseau d'accès de la pluralité de réseaux d'accès en utilisant les caractéristiques de réseau mesurées,

un moyen (50c) pour détecter un flux de trafic d'au moins une application (202) s'exécutant au niveau du dispositif source (10) devant être transmis à une destination,

un moyen (50c) pour sélectionner, en réponse au flux de trafic détecté, un réseau d'accès parmi la pluralité de réseaux d'accès en utilisant le comportement de variation de caractéristiques de réseau de la pluralité de réseaux d'accès,

**caractérisé en ce que** :

le moyen de sélection (50c) utilise un processus de décision de Markov pour sélectionner un réseau d'accès pour le flux de trafic identifié, et où le moyen de sélection (50c) est conçu pour réattribuer chaque flux de trafic à des instants prédéterminés à un réseau sélectionné de la pluralité de réseaux d'accès.

Fig. 1

201

Voice, video, and data applications

202

Middleware

50

204a          204b          204c

Ethernet        IEEE          IEEE
             802.11 g      802.11 b

204

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005055524 A1
- WO 2005062652 A1

**Non-patent literature cited in the description**

- **P. VIDALES ; J. BALIOSION ; J. SERRAT ; G. MAPP ; F. STEJANO ; A. HOPPER.** Autonomic sytem for mobility support in 4G networks. *IEEE Journal on Selcted Areas in Communications'05,* December 2005, vol. 23 (12
- **A. CUEVAS ; J. I. MORENO ; P. VIDALES ; H. EINSIEDLER.** The IMS platform: A solution for next generation network operators to be more than bit pipes. *IEEE Communications Magazine, issue on Advances of Service Platform Technologies,* August 2006
- **D. BERTSEKAS.** Dynamic Programming and Optimal Control. Athena Scientific, 2001, vol. 2
- **F. GUO ; J. CHEN ; W. LI ; T. CHIUEH.** Experiences in building a multihoming load balancing system. *Proc. IEEE INFOCOM,* 2004
- Extracting dynamical behavior via Markov models. **G. FROYLAND.** Nonlinear Dynamics and Statistics: Proceedings, Newton Institute, Cambridge, 1998. Birkhauser, 2001, 283-324
- **K. STUHLMULLER ; N. FARBER ; M. LINK ; B. GIROD.** Analysis of video transmission over lossy channels. *IEEE Journal on Selected Areas in Communication,* June 2000, vol. 18 (6